# EUROPEAN PATENT APPLICATION

(11) **EP 4 656 376 A1**
(43) Date of publication of application: **03.12.2025**
(21) Application number: 25178455.9
(22) Date of filing: 23.05.2025
(51) Int. Cl.: B32B 5/14, B32B 7/12, B32B 27/08, B32B 27/18, B32B 27/30, B32B 27/32, B32B 27/36, B32B 27/16

(54) **ECOLOGICALLY SUSTAINABLE PLASTIC PACKAGING**

(30) Priority: 29.05.2024 US 202418677246
(71) Applicant: ABB SCHWEIZ AG, 5400 Baden (CH)
(72) Inventor: RUTKEVICIUS, Marius, 5400 Baden (CH); KAMMER, Christoph, 5400 Baden (CH); ZHONG, Sheng, 5400 Baden (CH); SCOTT, Tiffany Catherine, 5400 Baden (CH); HETRICH, Matthew, 5400 Baden (CH); NEUPANE, Sneha, 5400 Baden (CH)
(74) Representative: Zimmermann & Partner Patentanwälte mbB

(57) **Abstract**

A multi-layered film for packaging products is provided. The film includes a top layer including post-consumer recycled (PCR) plastic, and a bottom layer including PCR plastic and/or virgin fossil-fuel based plastic, the bottom layer being a vapor insulation layer. The film includes 50% or more of PCR plastic by weight.

## Description

### BACKGROUND

The field of the disclosure relates generally to packaging, and more particularly, to ecologically sustainable plastic packaging and methods of assembling the packaging.

Plastics are ubiquitous in packaging. In some applications, such as packaging low voltage products, the plastic packaging needs to meet certain property requirements to ensure the quality of the products does not degrade throughout the shelf life. To reduce detrimental impact of plastics on the environment, post-consumer recycled (PCR) plastics have been used in packaging. Known packaging with PCR plastics and methods of assembling the packaging, however, are disadvantaged in some aspects, and improvements are desired.

### BRIEF DESCRIPTION

In one aspect, a multi-layered film for packaging products is provided. The film includes a top layer including post-consumer recycled (PCR) plastic, and a bottom layer including PCR plastic and/or virgin fossil-fuel based plastic, the bottom layer being a vapor insulation layer. The film includes 50% or more of PCR plastic by weight.

In another aspect, a multi-layered film is provided. The film includes a top layer including PCR plastic, and a bottom layer including PCR plastic and/or virgin fossil-fuel based plastic. The film includes 50% or more of sustainable plastic by weight, the top layer and the bottom layer excluding bio-based plastic.

In one more aspect, a method of assembling a multi-layered film is provided. The method includes forming a top layer including PCR plastic, forming a bottom layer including PCR plastic and/or virgin fossil-fuel based plastic, and coupling the top layer with the bottom layer. The film includes 50% or more of PCR plastic by weight.

### DRAWINGS

These and other features, aspects, and advantages of the present disclosure will become better understood when the following detailed description is read with reference to the accompanying drawings in which like characters represent like parts throughout the drawings.
FIG. 1 is a schematic diagram of a known film with post-consumer recycled (PCR) plastic, where the film has gel inclusions in the PCR plastic.
FIG. 2A is a schematic diagram of an example multi-layered film with PCR plastic, where the film has gel inclusions in the PCR plastic, and outer layers do not have gel inclusions.
FIG. 2B is another schematic diagram of the example multi-layered film.
FIG. 3 shows moisture vapor emission rates of a bio-based plastic, PCR plastics, and a virgin fossil-fuel based plastic.
FIG. 4 is a schematic diagram of another example multi-layered film.
FIG. 5 is a plot of a stress-extension curve of an example film, where the film has 50% of PCR plastic by weight.
FIG. 6 is a plot of a stress-extension curve of another example film, where the film has 90% of PCR plastic by weight.
FIG. 7 is a flow chart of an example method for assembling the films shown in FIGs. 2A, 2B and 4-6.

### DETAILED DESCRIPTION

The disclosure includes film formulations and methods for assembling films of improved sustainability by including post-consumer recycled (PCR) plastic and/or bio-based plastic, while achieving desired functional property requirements of the films. Method aspects will be in part apparent and in part explicitly discussed in the following description.

Low voltage products, such as electrical enclosures like outlet boxes, cable ties, crimp connectors, are fabricated from polymeric plastic, such as nylon. The products are stored in sealed packaging, and prior to use, the customers may shelve the products for an extended period time, like one or two years. During this period, the products may degrade and become brittle due to hygroscopic properties. To solve the problem, a widely adopted solution is to seal water inside the bags during packaging. The bags are fabricated from petroleum based plastic that acts as a moisture barrier to reduce water transmission to the environment.

Due to environmental concerns, using PCR plastic in the bags has been attempted. The known films that include PCR plastic, however, do not meet performance requirements. Common issues are poor optical properties, high friction, difficulty in surface printing, and high moisture vapor transmission rate.

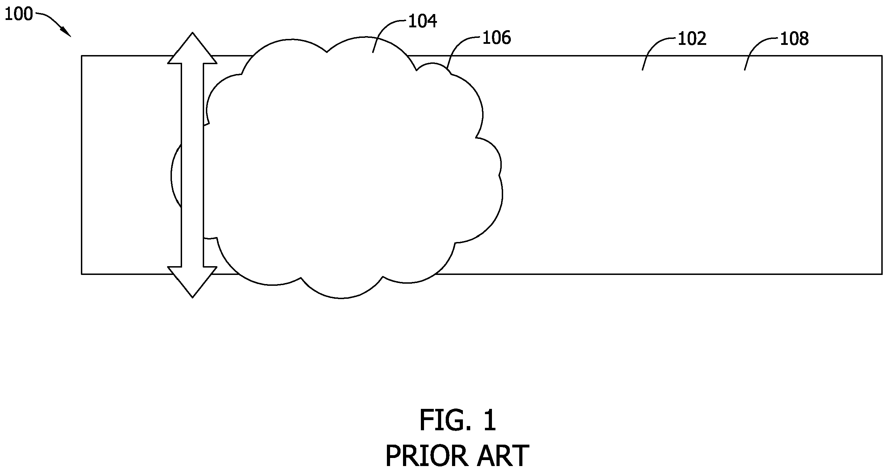

FIG. 1 is a schematic diagram of a known film 100 including PCR plastic 102. In recycling plastics, the plastics are mixed, melted, and extruded out as the film 100. The PCR plastic 102 often includes gel inclusions 104. Gel inclusions 104 are impurities stemming from the recycling process. For example, impurities, e.g., plastics with different chemistries from main plastics, may be mixed with the main plastics during the recycling process. When the impurities have higher melting temperatures than the main plastics, the impurities will remain as solids in the plastics, forming gel inclusions 104. Gel inclusions are entangled polymers and do not melt with other polymers consistently. As a result, a gel inclusion 104 may permit water vapor to escape through the junctions 106 between the gel inclusion and the neighboring polymers 108. The known film 100, therefore, may have increased moisture vapor transmission rate. A moisture vapor transmission rate refers the speed in which water or moisture vapors escape through the film. Further, because gel inclusions 104 may not bond with neighboring polymers 108 consistently, gel inclusions 104 acts as stress concentration of the film 100, reducing the mechanical properties, such as strength, of the film as a whole.

Besides causing the increase in moisture vapor transmission rate and reduction in mechanical properties, gel inclusions 104 also impair the optical properties of the film 100, where the gel inclusions reduce the film transparency and have negative impact on the film appearance as well as customer acceptance. Further, because the mixture of the film 100 lacks consistency, the tackiness or friction of the film 100 is high, which is problematic for manufacturing, where the high friction impedes movement of the film 100 in the stations and/or between stations during manufacturing. In addition, the film 100 is difficult to surface print and label, because the surface roughness may cause increased wear of the printing equipment. As a result, the percentage of PCR plastic 102 in the known films 100 is at most approximately 30% by weight, to meet the property requirements of the film 100.

In contrast, the films and methods of assembling the films as disclosed herein solve the above-described problems in known films. The films are multilayered. The compositions of the layers may be adjusted to meet desired property requirements. The percentage of PCR plastic in the films disclosed herein may be 50% or more by weight, while meeting the property requirements of the films. The films disclosed herein may include bio-based plastic in the middle layer, thereby increasing the environmental sustainability of the film. The film disclosed herein include 50% or more by weight of sustainable plastic, such as PCR plastic and/or bio-based plastic, while meeting the property requirements.

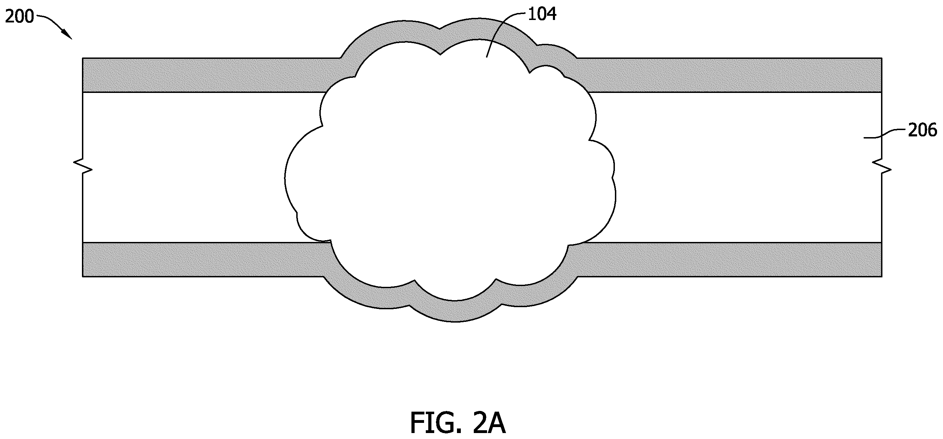

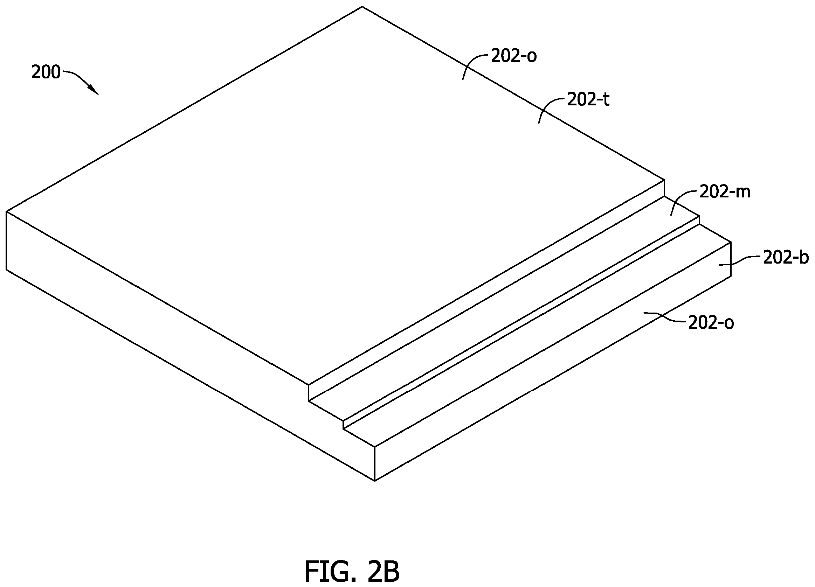

FIGs. 2A and 2B are schematic diagrams of an example film 200. FIG. 2A shows the film having gel inclusions 104, as a comparison to the known film 100. FIG. 2B is another schematic diagram of the film 200 showing the layered structure of the film 200. In the example embodiments, the film 200 is multi-layered. The film 200 includes a top layer 202-t and a bottom layer 202-b. The top layer 202 and the bottom layer 202 may be referred to as outer layers 202-o. The film 200 may further include a middle layer 202-m. The middle layer 202-m includes PCR plastic 206. The PCR plastic 206 includes gel inclusions 104. The top layer 202 and the bottom layer 202 may also include PCR plastic 206. In some embodiments, the top layer 202 and the bottom layer 202 include virgin fossil-fuel based plastic. Virgin fossil-fuel based plastic refers to plastic produced directly from fossil fuel, such as petroleum or natural gas, and having not been used or recycled. Mixing virgin fossil-fuel based plastic with PCR plastic increases the consistency of the film 200 and facilitates the control of the properties of the film 200.

In the example embodiment, the film 200 may be fabricated into bags for packaging products. The top layer 202-t is positioned exterior and the bottom layer 202-b is positioned interior and facing the products. The outer layer 202-o, especially the bottom layer 202-b, affects the surface properties of the film 200 more than the middle layer 202-m, such as friction and roughness. The example PCR plastic in the bottom layer 202-b may be high density polyethylene (HDPE), low density polyethylene (LDPE), linear low density polyethylene (LLDPE), ultra-low density polyethylene (ULDPE), polypropylene (PP), polyester, polyvinyl chloride (PVC), metallocene linear low density polyethylene, and/or any combination thereof. The outer layer 202 may be virgin fossil-fuel based plastic, PCR plastic, or a combination thereof.

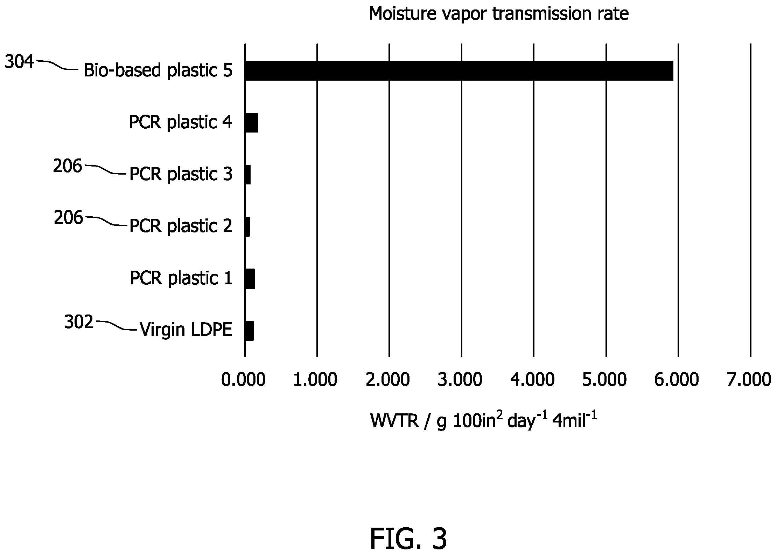

Referring to FIG. 3, moisture vapor transmission rates of different plastics are compared. Virgin fossil-fuel based plastic 302 is regarded as the industry standard for low moisture vapor transmission rate. Bio-based plastic 304, where the plastic is fabricated with bio-based materials or ingredients, such as wood, cellulose, starch, vegetable oil or fat, has a much higher moisture vapor transmission rate than virgin fossil-fuel based plastic 302. Bio-based plastic is suitable for increasing sustainability of plastic, but performs poorly in terms properties, compared with PCR plastic. Besides a relatively high moisture vapor transmission rate, bio-based plastic may have degraded mechanical properties, such as reduced strain at break, compared to PCR plastic or virgin fossil-fuel based plastic. Bio-based plastic may attract pests, such as rodents and insects, and be prone to bacterial infestation, and is therefore susceptible to degradation and attack by pests. Bio-based plastic may also have reduced optical property, compared to virgin fossil-fuel based plastic. Bio-based plastic may be included in the middle layer 202-m to increase the sustainability of the film 200, without compromising functional properties of the film 200.

Referring back to FIGs. 2A and 2B, in the example embodiments, bio-based plastic is excluded from the outer layers 202-o. The bottom layer 202-b may be a vapor insulation layer, where moisture vapors from the products packaged by the film 200 are restricted from escaping out of the package. Alternatively, the top layer 202-t or both outer layers 202-o may be vapor insulation layers. Gel inclusions may affect the moisture transmission rate. PCR plastic may be selected to have a comparable moisture vapor transmission rate to the moisture vapor transmission rate of virgin fossil-fuel based plastic (see PCR plastic 206 in FIG. 3). The PCR plastic may be selected from PCR plastic that is a mixture of clear plastic only or a mixture of dark plastic only. The PCR plastic may be mixed with virgin fossil-fuel based plastic to improve the properties of the film 200. Negative effects of gel inclusions may also be reduced by the multi-layered formulation of the film 200, because even if all layers include gel inclusions, the multiplicity of layers in the film 200 reduce the possibility of gel inclusions in different layers being aligned to produce negative effects.

In the example embodiment, sealant or a middle layer 202-m including sealant may be provided to increase the functional properties of the film 200. PCR plastic may have wide variations in functional properties. For example, PCR plastic, e.g., PCR LDPE, is an excellent barrier against moisture diffusion, but has reduced strength, due to excessive mechanical processing. Compared to PCR plastic, which has a relatively broad range of molecular weights, sealant has a relatively narrow molecular weight distribution. Including sealant facilitate the PCR plastic to melt uniformly, thereby increasing the function properties of the layers 202 and the film 200, such as mechanical strength and/or sealing. Example sealant materials are HDPE, LDPE, linear low density polyethylene (LLDPE), ULDPE, polyester, polyethylene terephthalate (PET), PVC, polyethylene, and any combination thereof.

In the example embodiments, sealant may be included in the outer layer 202-o and/or a middle layer 202-m of the film 200. In some embodiments, sealant may migrate from one layer to the other and become uniformly distributed, to increase functional properties of the film 200 and reduce the negative effects of gel inclusions 104 on the properties of the film 200. Sealant increases the consistency of the film 200 such that the film 200 melts uniformly during the fabrication process. Sealant may be included in the bottom layer 202-b such that any additional packaging parts, such as zippers, may be relatively easily formed on the bottom layer 202 by being molten to the bottom layer 202. With increased melting consistency from the sealant, the sealing provided by the zippers is increased. Additionally, even without the use of a zipper, melting and/or sealing of the film 200 are improved and have increased uniformity. For example, sealing of a bag fabricated with the film 200 is improved when the bottom layers 202-b of edges of the film 200 are melted and/or coupled together to form into the bag.

In the example embodiments, a slip additive may be included in the outer layer 202-o to reduce friction of the film 200, thereby increasing the ease in manufacturing of the film 200 and assembling of the film 200 with products. Example slip agents may be selected from compounds or masterbatches based on fatty acid amides or silicone chemicals.

In some of the example embodiments, the middle layer 202-m is a sealant layer and formed with a sealant and PCR plastic. The thickness of the middle layer 202-m may range from 1 µm to 250 µm. The thickness of the sealant layer 202 may be adjusted based on the needs. Sealant may be selected to have adhesivity suitable for adhering to the top layer 202-t and the bottom layer 202-b. The middle layer 202-m is optional, where the film 200 does not include the middle layer 202-m.

In the example embodiments, the negative effects of gel inclusions to the properties of the film 200 are reduced by the multilayered structure of the film 200 (see FIG. 2A). The top layer 202 and/or the bottom layer 202 serve as barriers to moisture vapors from the products and increase the strength of the film 200, where gel inclusions may otherwise cause stress concentrations or may allow increased moisture vapor transmission rate. Therefore, the middle layer 202-m has reduced requirements on the properties from the ingredients and may include a broad range of PCR plastics and/or bio-based plastic, thereby increasing the sustainability of the film 200 while maintaining the functional properties of the film 200.

The printability of the PCR plastic may be limited, due to low surface energy and relatively high print tool wear due to surface roughness of the films. In the example embodiment, the top layer 202 may be the layer for printing. The top layer 202-t includes plastic selected for having proven printability. The top layer 202-t may be virgin fossil-fuel based plastic, PCR plastic, or a combination thereof. Example top layer 202-t may be fabricated from plastics such as HDPE, LDPE, LLDPE, ULDPE, PP, polyester, polyhydroxyalkanoate (PHA), nylons, PLA, PVC, metallocene linear low density polyethylene, and/or any combination thereof. In some embodiments, the top layer 202-t is corona treated to increase the surface energy of the top layer 202-t, thereby increasing the printability of the top layer 202-t. The top layer 202-t may include slip additive and/or sealant.

In the example embodiments, additives may be added in the layers, depending on the applications. Additives may include organic ingredients, such as slip agent, antistatic agent, cellulose, plasticizer, rubbering ingredient, and/or antioxidant agent. Additives may be inorganic, such as particles, carbon black, clay fiberglass, carbon fibers, and silica. In some embodiments, additives are a mixture of organic and inorganic ingredients.

In some embodiments, the layers 202 may include ultra-violet (UV) resistant additives, to increase the resistance to UV light and extend the shelf life of the film 200 when the films and the products are stored outdoors. The UV resistant additives may be added to any one or more of the layers. Alternatively, the UV resistant additives may be added only to one or both of the outer layers 202-o.

In one example, optical properties of the film 200 may be improved by selecting the PCR plastic that is relatively clear, where the percent reduction in luminosity by the PCR plastic is relatively low.

The ingredients in the PCR plastic and/or virgin fossil-fuel based plastic in different layers 202 may be different or the same. The ingredients may be selected and adjusted based on the design and the functional requirements of the film 200.

The total thickness of the film 200 may range from 1 mil (0.0254 mm) to 10 mil (0.254 mm). The thickness may be adjusted, depending on the needs. For example, the thickness may be increased to increase the mechanical strength and/or reduce the moisture vapor transmission rate of the film 200.

In operation, to fabricate a packaging bag with the film 200, the bottom layer 202-b is positioned interior and the top layer 202-t is positioned exterior. As such, the bottom layer 202-b retains moisture inside the packaging bag, while label may be printed on the top layer 202-t if a label is desired. The label may be product labels, optical codes such as barcodes, and/or any other markings. The top layer 202-t as the exterior layer and the bottom layer 202-b as the interior layer of a packaging bag are described as example for illustration purposes only. The orientation of the layers may be reversed, where the top layer 202-t may be positioned interior and the bottom layer 202-b may be positioned exterior.

In the example embodiment, the film 200 may be fabricated by extrusion blow molding. Each layer is compounded and individually melted in a separate barrel. Barrels feed the molten plastics into lamination dies. The multilayers are extruded and adhered together between neighboring layers. The extrusion die forms a plastic tube extending tens of meters high. Air may be circulated or blown inside and/or outside the plastic tubing to cool the film 200 and set the shape of the film 200.

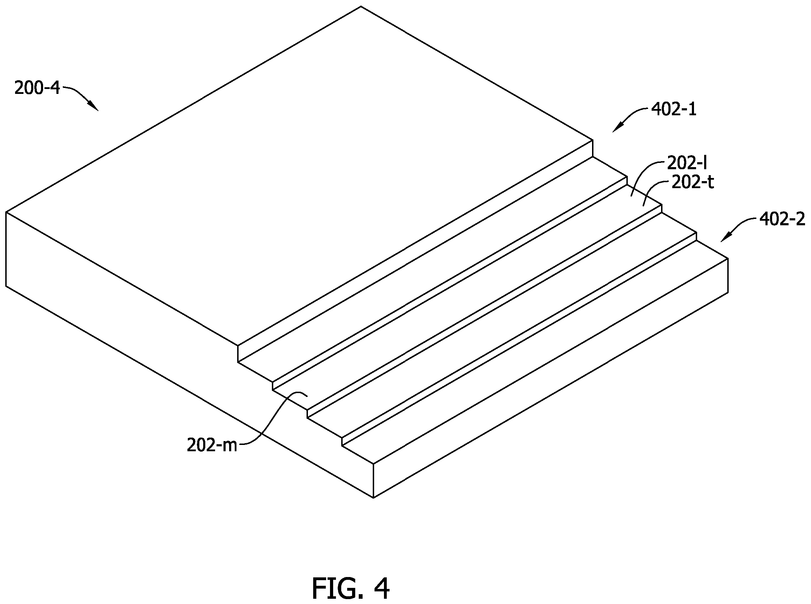

FIG. 4 is a schematic diagram of another example embodiment of the film 200-4. In the example embodiment, compared to the film 200 shown in FIGs. 2A and 2B, a labeling layer 202 may be a middle layer 202-m to protect the label from being scraped off or deteriorated from environmental exposure.

In the example embodiment, the film 200-4 may be formed by laminating two or more sub-films 402 together. The film 200 includes a first sub-film 402-1 and a second sub-film 402-2. Each sub-film 402 includes one or more layers 202. Sub-films 402 may be multi-layered. Sub-films 402 may be formed by mechanisms, such as extrusion blow molding or a cast film process. A label may be printed on the top layer 202-t of the first sub-film 402. The sub-films 402 are laminated together after a label is printed on the top layer 202-t of the first sub-film 402-1 and then positioning the top layer 202-t or the labelling layer 202-l to face the second sub-film 402-2, such that the label on the labelling layer 202 is protected from being damaged by other layers 202. The labelling layer 202 becomes a middle layer 202-m of the film 200. To reduce the likelihood of delamination of the labeling layer 202 from the second sub-film 402-2, sealant may be included into the labelling layer 202, to increase the strength of adhesion of the labeling layer 202 with the second sub-film 402-2. In some embodiments, sealant may be included between the top layer 202-t and labeling layer 202-l, and/or between the labelling layer 202-l and the bottom layer 202-b. In other embodiments, an adhesive layer may be included adjacent the labeling layer 202, such as being above the labeling layer 202, below the labeling layer 202, or both, thereby increasing the adhesion strength of the sub-films 402 and/or the layers 202. In some embodiments, all layers in the film 200 may be formed and coupled together by lamination.

Cradle-to-grave life cycle analysis (LCA) is performed on example films 200 at different levels of PCR plastic (see Table 1 below). The film 200 disclosed herein greatly improves LCA of the film 200, where the carbon emission is reduced by 35%, when the percentage of PCR plastic by weight in the film 200 is 50%, or by 69% when the percentage of PCR plastic by weight in the film 200 by weight is 100%.

**Table 1. LCA for the film at different levels of PCR plastic.**

| | | | | |
|---|---|---|---|---|
| PCR Plastic Content / % by Weight | 0 (LDPE benchmark) | 50 | 90 | 100 |
| LCA improvement (package) / % | 0 | 35 | 62 | 69 |

### EXAMPLES

### Example 1

Table 2 lists an example compositions of the film 200. Virgin LDPE, a virgin fossil-fuel based plastic, may include LDPE and/or metallocene LDPE.

**Table 2. Example compositions of the film 200.**

| Layer | Thickness | Ranges for materials, percentage by weight (wt%) |
|---|---|---|
| Top | 0.00127-0.127 mm | 30-100% PCR plastic, |
| | | 0-90% virgin LDPE, |
| | | 0-10% Slip agent, |
| | | 0-10% sealant |
| Middle | 0.00127-0.254 mm | 5-100% PCR plastic, |
| | | 0-95% virgin LDPE |
| Bottom | 0.00127-0.127 mm | 30-100% PCR plastic, |
| | | 0-10% sealant, |
| | | 0-70% virgin LDPE |

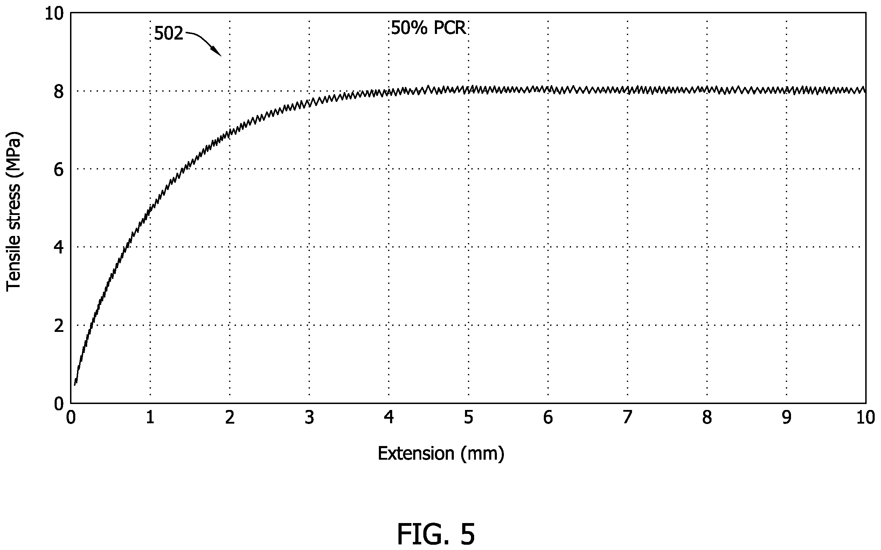

The thickness of the film 200 may be 100 µm. The thickness of the film 200 may be in a range of 4-500 µm. The tensile properties of the film 200 is shown in FIG. 5, which includes a stress-extension curve 502 for a film 200 having 50% of PCR plastic by weight, where the curve is produced when the film 200 is under tensile test with the distance between grips is 1.5 inches (in.) (3.81 cm). The tensile properties are measured until 60% elongation. The Young's modulus is calculated from the initial slope in the stress-strain curve and was 280±20 MPa. The optical properties are measured as percent reduction in luminosity and was 11±1%. The film 200 is treated with corona treatment to increase surface energy and facilitate label printing.

Table 3 shows an example composition of a film 200 having 50% of PCR plastic by weight.

**Table 3. Example compositions of a film 200 having 50% of PCR plastic by weight.**

| Layer | Ranges for materials, wt% |
|---|---|
| Top - 0.02 mm | 100% PCR plastic |
| Middle - 0.06 mm | 20% PCR plastic and 80% sealant |
| Bottom - 0.02 mm | 90% PCR plastic, 5% slip agent, 5% sealant. |

### Example 2

Another example film 200 may be formulated with composition as in Table 4. The overall percentage of PCR plastic by weight is 90%.

**Table 4. Example compositions of the film 200 having 90% PCR plastic by weight.**

| Layer | Ranges for materials, wt% |
|---|---|
| Top - 0.02 mm | 100% PCR plastic |
| Middle - 0.06 mm | 85% PCR plastic and 15% sealant |
| Bottom - 0.02 mm | 95% PCR plastic and 5% slip agent |

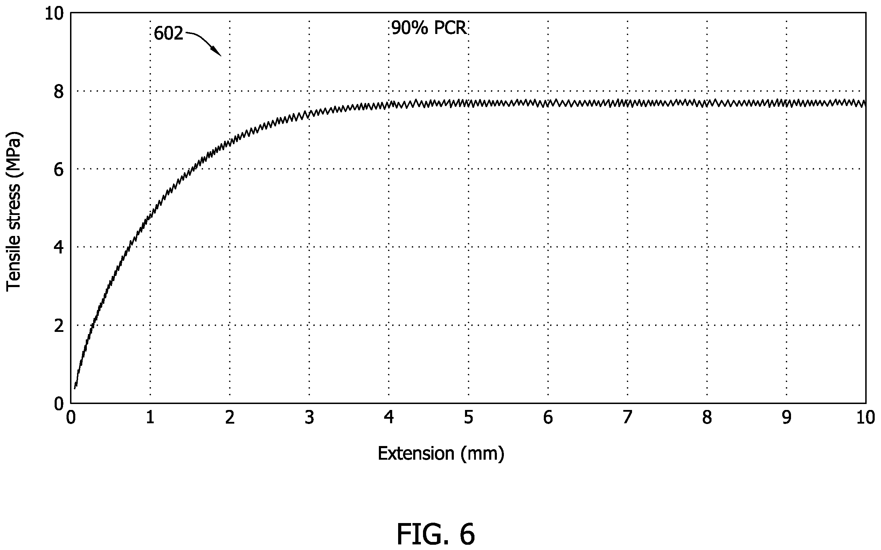

The film 200 is blow molded into a film having a thickness of 100 µm. The tensile properties are shown in FIG. 6, which includes a stress-extension curve 602 for the film 200 having 90% of PCR plastic in weight, where the curve is produced when the film 200 is under a tensile test with the distance between grips at 1.5 in. (3.81 cm). Tensile properties are measured until 60% elongation, and the Young's modulus is calculated from the initial slope in the stress-strain curve and was 270±30 MPa. The optical properties are measured as percent reduction in luminosity and was 12.5±1%.

In the example embodiment, in the top layer 202-t, 100% PCR plastic is included. The PCR plastic may be selected to have moisture vapor transmission rate comparable with virgin fossil-fuel based plastic. In the bottom layer 202-b, 95% PCR plastic is included. The PCR plastic may be selected to have moisture vapor emission rate comparable with virgin fossil-fuel based plastic. 5% slip agent is included in the bottom layer 202-b to reduce friction. In the middle layer 202-m, 5% of sealant is included to improve adhesion and mechanical properties.

### Example 3

One more example film 200 may be formulated with composition as in Table 5. Overall, the film 200 includes 39% of PCR plastic by weight, 57% of bio-based plastic by weight, and 4% virgin fossil-fuel based plastic by weight.

**Table 5. Example compositions of the film 200 having bio-based plastic.**

| Layer | Ranges for materials, wt% |
|---|---|
| Top - 0.02 mm | 100% PCR plastic |
| Middle -0.06 mm | 95% cellulose bio-based platics and 5% sealant |
| Bottom - 0.02 mm | 95% PCR plastic and 5% slip agent |

In the example embodiment, bio-based cellulose plastic is incorporated into the film 200. Because cellulose plastic is a poor barrier to moisture transmission, outer layers of plastics with excellent moisture barriers are used. The outer layers 202-o may include materials such as LDPE, HDPE, LLDPE, PP, or any combination thereof.

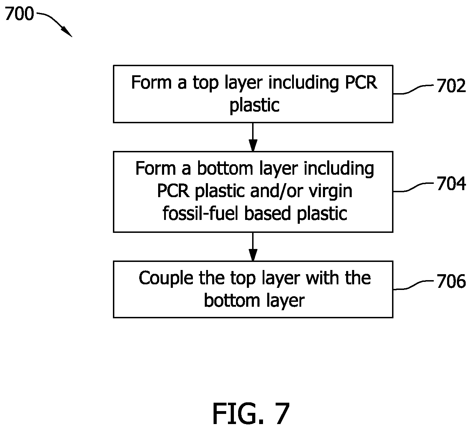

FIG. 7 is a flow chart of an example method 700 of assembling a film. In the example embodiment, the method 700 includes forming 702 a top layer including PCR plastic. The method 700 also includes forming 704 a bottom layer including PCR plastic and/or virgin fossil-fuel based plastic. Further, the method 700 includes coupling 706 the top layer with the bottom layer.

At least one technical effect of the systems and methods described herein includes (a) films for packaging products with desired moisture vapor transmission rate that includes 50% or more of PCR plastic by weight; (b) a multilayered film to improve properties of the film; (c) an outer layer of the film including sealant; (d) an outer layer of the film including slip agent; (e) a top layer of the film being corona treated; (f) a laminated film having a labeling layer as a middle layer; (g) a middle layer of the film including bio-based plastic; and (h) a middle layer of the film including sealant.

Example embodiments of films and methods for assembling films are described above in detail. The systems and methods are not limited to the specific embodiments described herein but, rather, components of the systems and/or operations of the methods may be utilized independently and separately from other components and/or operations described herein. Further, the described components and/or operations may also be defined in, or used in combination with, other systems, methods, and/or devices, and are not limited to practice with only the systems described herein.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise. "Approximately" and/or "substantially" as applied to a particular value of a range applies to both values, and unless otherwise dependent on the precision of the instrument measuring the value, may indicate +/- 10% of the stated value(s).

As used herein, an element or step recited in the singular and proceeded with the word "a" or "an" should be understood as not excluding plural elements or steps, unless such exclusion is explicitly recited. Furthermore, references to "example" or "one example" of the present disclosure are not intended to be interpreted as excluding the existence of additional examples that also incorporate the recited features. Further, to the extent that terms "includes," "including," "has," "contains," and variants thereof are used herein, such terms are intended to be inclusive in a manner similar to the term "comprises" as an open transition word without precluding any additional or other elements.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A multi-layered film (200) for packaging products, the multi-layered film comprising:
a top layer (202-t) comprising post-consumer recycled (PCR) plastic (206); and
a bottom layer (202-b) comprising the PCR plastic and/or virgin fossil-fuel based plastic (302), the bottom layer being a vapor insulation layer,
wherein the multi-layered film comprises 50% or more of the PCR plastic by weight.

2. The multi-layered film of claim 1, further comprising:
a middle layer (202-m) positioned between the top layer and the bottom layer.

3. The multi-layered film of claim 2, wherein the middle layer comprises a sealant.

4. The multi-layered film of claim 2 or 3, wherein the middle layer comprises bio-based plastic (304).

5. The multi-layered film of any one of claims 2 to 4, wherein the multi-layered film is laminated, the middle layer comprising labels.

6. The multi-layered film of any one of claims 1 to 5, wherein the top layer is corona treated.

7. The multi-layered film of any one of claims 1 to 6, wherein the top layer further comprises a slip agent.

8. The multi-layered film of any one of claims 1 to 7, wherein a percent reduction in luminosity of the multi-layered film is approximately 15% or less.

9. The multi-layered film of any one of claims 1 to 8, wherein at least one of the top layer or the bottom layer further comprises one or more organic and/or inorganic additives.

10. The multi-layered film of any one of claims 1 to 9,
wherein the multi-layered film comprises 50% or more of sustainable plastic by weight, the top layer and the bottom layer excluding bio-based plastic (304).

11. A method (700) of assembling a multi-layered film (200), the method comprising:
forming (702) a top layer (202-t) including post-consumer recycled (PCR) plastic (206);
forming (704) a bottom layer (202-b) including the PCR plastic and/or virgin fossil-fuel based plastic (302); and
coupling (706) the top layer with the bottom layer,
wherein the multi-layered film includes 50% or more of the PCR plastic by weight.

12. The method of claim 11, wherein forming the bottom layer further comprises:
forming the bottom layer as a vapor insulation layer.

13. The method of claim 11 or 12, further comprising:
forming a middle layer positioned between the top layer and the bottom layer,
wherein forming the middle layer further comprises:
adding a sealant in the middle layer, and/or
including bio-based plastic (304) in the middle layer.

14. The method of any one of claims 11 to 13, further comprising:
forming a first sub-film (402-1) including the top layer and the bottom layer;
forming a second sub-film (402-2) including the top layer or the bottom layer;
printing labels on the top layer of the first sub-film; and
laminating the first sub-film with the second sub-film to form the multi-layered film by facing the top layer of the first sub-film toward the second sub-film.

15. The method of any one of claims 11 to 14, wherein forming the top layer further comprises:
performing corona treatment to the top layer, and/or
including a slip agent in the top layer.
